# EUROPEAN PATENT SPECIFICATION

(11) **EP 4 486 063 B1**
(45) Date of publication and mention of the grant of the patent: **22.07.2026**
(21) Application number: 23756100.6
(22) Date of filing: 23.01.2023
(51) Int. Cl.: D03D 47/30, D03J 1/00, H05B 47/105, G03B 15/05, G03B 39/00

(54) **STROBOSCOPE FOR LOOM**
STROBOSKOP FÜR WEBMASCHINEN
STROBOSCOPE POUR MÉTIER À TISSER

(30) Priority: 21.02.2022 JP 2022024672
(43) Date of publication of application: 01.01.2025
(73) Proprietor: KABUSHIKI KAISHA TOYOTA JIDOSHOKKI, Kariya-shi, Aichi 448-8671 (JP)
(72) Inventor: INOUE Ryo, Kariya-shi, Aichi 448-8671 (JP); SUZUKI Akihiro, Kariya-shi, Aichi 448-8671 (JP)
(74) Representative: TBK
(86) International application number: PCT/JP2023/001977
(87) International publication number: WO 2023/157572

(56) References cited:
- JP-A- H01 239 141
- JP-A- H02 284 386
- JP-A- H02 284 386
- JP-A- H03 241 043
- JP-B2- H 069 158

## Description

### TECHNICAL FIELD

The present invention relates to a loom stroboscope.

### BACKGROUND ART

A stroboscope is used for observing a loom. A loom stroboscope used for observing a loom includes a light emitting device, a trigger control unit, and an input unit. As disclosed in Patent Literature 1, the trigger control unit is configured to transmit a trigger signal to the light emitting device to cause the light emitting device to emit light when a main shaft of the loom rotates by a delay angle from a reference angle. The input unit is operated by an observer to set a desired delay angle.

### Citation List

### Patent Literature

Patent Literature 1: Japanese Examined Patent Publication No. H06-9158

### SUMMARY OF THE INVENTION

### Technical Problem

The suitable delay angle facilitates the observation of the loom. Accordingly, the observer adjusts the delay angle to obtain the suitable delay angle. For example, the adjustment of the delay angle includes the following steps. First, the observer operates the input unit to set a conceivable suitable delay angle. The observer then observes the loom by using the set delay angle. If the set delay angle is not suitable for observing the loom, the observer operates the input unit to change the delay angle. The observer observes the loom by using the changed delay angle. If the changed delay angle is not suitable, the observer operates the input unit to change the delay angle again. In such a way, the observer repeats input of the delay angle and eye observation of the loom to adjust the delay angle, which decreases work efficiency.

### Solution to Problem

A loom stroboscope for solving the previously described problem includes: a light emitting device; and a trigger control unit configured to transmit a trigger signal to the light emitting device to cause the light emitting device to emit light when a main shaft of a loom rotates by a delay angle from a reference angle, wherein the trigger control unit is configured to change the delay angle by a predetermined amount of change within a predetermined range of change.

Since the trigger control unit changes the delay angle by the predetermined amount of change within the predetermined range of change, the observer does not have to input the delay angle every time to change the delay angle. This therefore improves efficiency in the adjustment of the delay angle.

The loom stroboscope may include an input unit for inputting the predetermined range of change and the predetermined amount of change.

This configuration allows the observer to operate the input unit to set the desired range of change and the desired amount of change.

The loom stroboscope may include a camera that is configured to capture an image in synchronization with light emission of the light emitting device.

This configuration allows capturing images that show the condition of the loom at various delay angles.

The loom stroboscope may include an image display for displaying the image captured by the camera.

This allows the observer to observe the loom with the image display.

The trigger control unit of the loom stroboscope may be configured to repeatedly change the delay angle by the predetermined amount of change within the predetermined range of change.

The loom operates at a high speed. Accordingly, the eye observation of a weft yarn may fail unless the trigger control unit repeatedly changes the delay angle. However, the trigger control unit repeatedly changes the delay angle, so that the eye observation is facilitated.

### Advantageous Effects of the Invention

The present invention, which has been made in light of the above described problem, is directed to providing a loom stroboscope that allows efficient adjustment of a delay angle.

### BRIEF DESCRIPTION OF THE DRAWINGS

FIG. 1 is a schematic diagram of a loom stroboscope and a loom.
FIG. 2 is a view for explaining a relationship between external input signals and trigger signals.
FIG. 3 is a schematic diagram showing information displayed on a display.

### DESCRIPTION OF EMBODIMENT

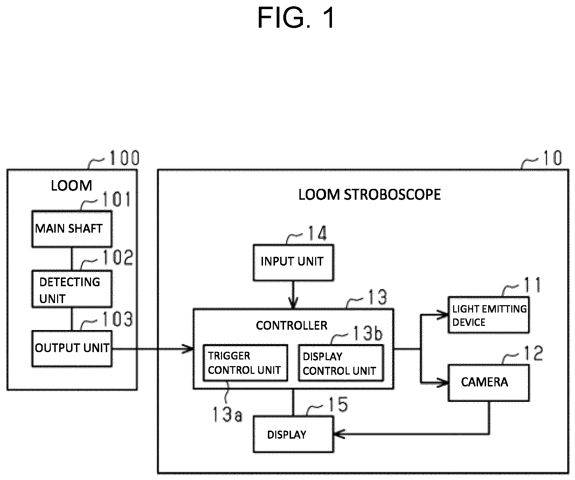

The following will describe an embodiment of a loom stroboscope with reference to FIGS. 1 to 3. The loom stroboscope is a stroboscope used for observation of a loom. In the present embodiment, the observation of the loom is to observe the travelling condition of a weft yarn. A loom 100 of the present embodiment is an air jet loom that uses air to insert a weft yarn.

### Loom

As illustrated in FIG. 1, the loom 100 includes a main shaft 101 and a nozzle (not illustrated) from which a weft yarn is injected. The main shaft 101 is driven by a main motor (not illustrated). The timing at which the weft yarn is injected from the nozzle corresponds to a rotation angle of the main shaft 101. Specifically, the weft yarn is injected from the nozzle when the main shaft 101 rotates by a predetermined rotation angle from a particular rotation angle. In the following description, the particular rotation angle of the main shaft 101 is referred to as a reference angle. Furthermore, an angle delayed from the reference angle is referred to as a delay angle.

The loom 100 includes a detecting unit 102 and an output unit 103. The detecting unit 102 is configured to detect the rotation angle of the main shaft 101. The detecting unit 102 is, for example, a rotary encoder. The detecting unit 102 is connected to the output unit 103. The detecting unit 102 transmits a detected rotation angle of the main shaft 101 to the output unit 103. The output unit 103 transmits a signal to the loom stroboscope every time the detected rotation angle corresponds to a predetermined reference angle. For example, if the reference angle is 0°, the output unit 103 outputs a signal every time the rotation angle of the main shaft 101 becomes 0°.

### Loom stroboscope

A loom stroboscope 10 includes a light emitting device 11, a camera 12, a controller 13, an input unit 14, and a display 15.

### Light emitting device

The light emitting device 11 is, for example, an LED light. The light emitting device 11 is disposed on a surface of a housing (not illustrated) of the loom stroboscope 10. The light emitting device 11 is connected to a trigger control unit 13a of the controller 13. The trigger control unit 13a will be described later. The light emitting device 11 emits light upon receiving a trigger signal from the trigger control unit 13a.

### Camera

The camera 12 is an imaging device. The camera 12 includes an image sensor. The camera 12 is disposed on the surface of the housing so that the camera 12 captures images of an object illuminated by the light emitting device 11. The camera 12 is connected to the trigger control unit 13a. The camera 12 is configured to capture an image upon receiving a trigger signal from the trigger control unit 13a.

The loom stroboscope 10 is arranged so that the light emitting device 11 illuminates the weft yarn and the camera 12 captures images of the weft yarn in the loom 100. The loom stroboscope 10 may be fixed at a desired position with a fixing device (not illustrated).

### Controller

The controller 13 includes a processor and a storage unit. For example, the processor is a Central Processing Unit (CPU), a Graphics Processing Unit (GPU), or a Digital Signal Processor (DSP). The storage unit includes Random Access Memory (RAM) and Read Only Memory (ROM). The storage unit stores program code or instructions for causing the processor to execute the processing. The storage unit, i.e., a computer-readable medium, includes any available medium accessible by a general-purpose or dedicated computer. The controller 13 may include a hardware circuit, such as an Application Specific Integrated Circuit (ASIC) or a Field Programmable Gate Array (FPGA). The controller 13, which is a processing circuit, may include one or more processors operating in accordance with a computer program, one or more hardware circuits, such as ASICs and FPGAs, or combinations thereof.

The controller 13 includes the trigger control unit 13a for controlling a trigger signal and a display control unit 13b for controlling the display 15. As previously described, the trigger signal of the present embodiment is a signal for causing the light emitting device 11 to emit light and the camera 12 to capture an image. In other words, the trigger control unit 13a is configured to control the trigger signal to control the light emitting device 11 and the camera 12.

The trigger control unit 13a is connected to the output unit 103 of the loom 100. The trigger control unit 13a receives a signal, which is an external input signal, from the output unit 103 of the loom 100. The trigger control unit 13a sets the delay angle. The setting of the delay angle will be described later. The trigger control unit 13a controls the trigger signal based on the external input signal from the loom 100 and the set delay angle.

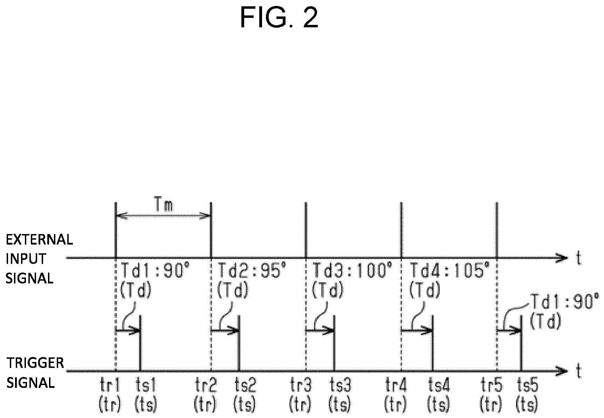

As illustrated in FIG. 2, the trigger control unit 13a determines a rotation period Tm of the main shaft 101 based on the interval between the external input signals. The trigger control unit 13a converts the delay angle to a delay time Td by using the rotation period Tm of the main shaft 101 and the reference angle. The trigger control unit 13a transmits the trigger signal to the light emitting device 11 and the camera 12 at a time ts, which is a time when a delay time Td has elapsed from a time tr at which the external input signal is input. In other words, the trigger control unit 13a transmits the trigger signal to the light emitting device 11 and the camera 12 when the main shaft 101 rotates by the delay angle from the reference angle.

According to the present embodiment, the loom stroboscope 10 has a first setting mode in which the loom stroboscope 10 sets the delay angle to a fixed value and a second setting mode in which the loom stroboscope 10 changes the delay angle.

When the loom stroboscope 10 is in the first setting mode, the trigger control unit 13a sets the delay angle to one angle, which is input by the observer via the input unit 14.

When the loom stroboscope 10 is in the second setting mode, the trigger control unit 13a changes the delay angle by a predetermined amount of change within a predetermined range of change. That is, the trigger control unit 13a sets multiple delay angles that are different by a predetermined amount of change within a predetermined range of change.

The trigger control unit 13a of the present embodiment outputs a trigger signal once per rotation of the main shaft 101. The trigger control unit 13a sets one delay angle per rotation of the main shaft 101. The trigger control unit 13a changes the delay angle by the predetermined amount of change within the predetermined range of change per rotation of the main shaft 101.

In the present embodiment, the range of change and the amount of change of the delay angle are set by the observer. The range of change of the delay angle is set by setting the minimum value and the maximum value of the delay angle. That is, the range of change of the delay angle is defined by the minimum value and the maximum value.

In the present embodiment, the trigger control unit 13a repeatedly changes the delay angle by the predetermined amount of change within the predetermined range of change until the observer stops the second setting mode. Specifically, the trigger control unit 13a changes the delay angle by the predetermined amount of change from the minimum value to the maximum value within the predetermined range of change. The trigger control unit 13a changes the delay angle to the maximum value of the range of change, and then resets the delay angle to the minimum value of the range of change.

### Input unit

The input unit 14 is disposed on the housing of the loom stroboscope 10. The input unit 14 is a part of the loom stroboscope 10 operated by the observer to input information into the loom stroboscope 10. The input unit 14 of the present embodiment has, for example, a dial for inputting an angle and an operation button for selecting a button displayed on the display 15.

### Display

The display 15 is disposed on the housing of the loom stroboscope 10. The display 15 is controlled by the display control unit 13b to display.

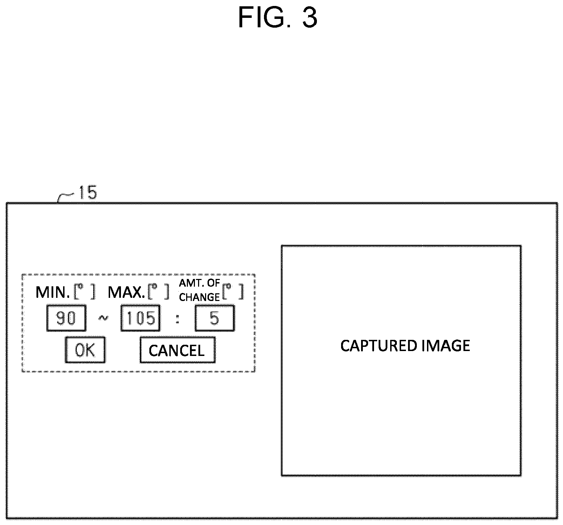

As illustrated in FIG. 3, the display control unit 13b causes the display 15 to display an operation screen and the captured image. The display 15 serves as an operation screen display for displaying an operation screen and also serves as an image display for displaying captured images.

The observer operates the loom stroboscope 10 from the operation screen. FIG. 3 illustrates the operation screen when the loom stroboscope 10 is in the second setting mode. The operation screen is provided with an input screen for inputting the minimum value, the maximum value, and the amount of change of the delay angle; an OK button for starting the second setting mode; and a cancel button for stopping the second setting mode. Although not illustrated, the operation screen is also provided with a mode change button for changing the setting mode of the loom stroboscope 10 to the first setting mode; a start button for activating the loom stroboscope 10; and a stop button for stopping the loom stroboscope 10.

The observer inputs a desired delay angle by turning the dial of the input unit 14 while checking the angle displayed on the input screen of the display 15. The observer selects a desired button from the buttons displayed on the display 15 by operating the operation button of the input unit 14 while checking the operation screen of the display 15.

### Operation of loom stroboscope 10

The following will specifically describe the operation of the loom stroboscope 10 in the second setting mode with a specific example.

The observer operates the input unit 14 to set the range of change and the amount of change of the delay angle. For example, in a case that the weft yarn is injected from the nozzle when the rotation angle of the main shaft is 90°, the delay angle needs to be set to a value near 90° so that the condition of the weft yarn can be observed. Accordingly, the observer enters 90 for the minimum value [°], 105 for the maximum value [°], and 5 for the amount of change [°] on the input screen of the operation screen. Then, the observer selects the OK button.

The trigger control unit 13a sets the delay angle based on the minimum value, the maximum value, and the amount of change that are input via the input unit 14. The trigger control unit 13a changes the delay angle by 5° increments in the range of change of 90° to 105°.

As illustrated in FIG. 2, the trigger control unit 13a sets the delay angle to 90°. The trigger control unit 13a outputs a trigger signal at a time ts1[s] after the lapse of a delay time Td1[s], which corresponds to the delay angle of 90°, from a time tr1[s] at which an external input signal is input.

Sequentially, the trigger control unit 13a changes the delay angle to 95°. The trigger control unit 13a outputs a trigger signal at a time ts2[s] after the lapse of a delay time Td2[s], which corresponds to the delay angle of 95°, from a time tr2[s] at which an external input signal is input.

Then, the trigger control unit 13a changes the delay angle to 100°. The trigger control unit 13a outputs a trigger signal at a time ts3[s] after the lapse of a delay time Td3[s], which corresponds to the delay angle of 100°, from a time tr3[s] at which an external input signal is input.

Then, the trigger control unit 13a changes the delay angle to 105°. The trigger control unit 13a outputs a trigger signal at a time ts4[s] after the lapse of a delay time Td4[s], which corresponds to the delay angle of 105°, from a time tr4[s] at which an external input signal is input.

Then, the trigger control unit 13a resets the delay angle to 90°. The trigger control unit 13a outputs a trigger signal at a time ts5[s] after the lapse of the delay time Td1[s], which corresponds to the delay angle of 90°, from a time tr5[s] at which an external input signal is input.

In such a way, the trigger control unit 13a repeatedly changes the delay angle until the observer stops the second setting mode by selecting the cancel button.

The light emitting device 11 emits light every time receiving the trigger signal. The camera 12 captures an image every time receiving the trigger signal. The camera 12 captures an image at the same time as the light emitting device 11 emits light. That is, the camera 12 captures an image in synchronization with the light emission of the light emitting device 11. The display control unit 13b causes the display 15 to display the image captured by the camera 12. This allows the observer to observe the traveling condition of the weft yarn with the captured image displayed on the display 15, in addition to eye observation of the weft yarn.

The following will describe operations and advantageous effects of the present embodiment.
(1) The trigger control unit 13a changes the delay angle by a predetermined amount of change within a predetermined range of change. This eliminates the need for the observer to input the delay angle every time to change the delay angle. This therefore improves efficiency in the adjustment of the delay angle.
(2) The loom stroboscope 10 includes the input unit 14 for inputting the predetermined range of change and the predetermined amount of change. This configuration allows the observer to operate the input unit 14 to set the desired range of change and the desired amount of change of the delay angle.
(3) The loom stroboscope 10 includes the camera 12 that is configured to capture an image in synchronization with light emission of the light emitting device 11. This configuration allows the camera 12 to capture images that show the condition of the loom 100 at various delay angles.
(4) The loom stroboscope 10 includes the display 15 for displaying the images captured by the camera 12. This allows the observer to observe the travelling condition of the weft yarn with the display 15.
(5) The loom 100 operates at a high speed. Accordingly, the eye observation of the weft yarn may fail unless the trigger control unit 13a repeatedly changes the delay angle. However, in the present embodiment, the trigger control unit 13a repeatedly changes the delay angle, so that the eye observation is facilitated.

The embodiment of the present invention may be modified in various manners, as exemplified below. The present embodiment and the following modification examples may be combined within the scope of the present invention.
∘ The loom stroboscope 10 does not necessarily need the camera 12.
∘ The loom stroboscope 10 may have the second setting mode only.
∘ The loom stroboscope 10 may include a touch panel, instead of the input unit 14 and the display 15. The touch panel is disposed on the housing of the loom stroboscope 10. The touch panel serves as both the input unit and the display. In this configuration, the observer operates the touch panel to input a predetermined range of change and a predetermined amount of change. The display control unit 13b controls the touch panel to display. The observer uses the captured image displayed on the touch panel to observe the weft yarn.
o The operation screen display for displaying the operation screen and the image display for displaying the captured images may be individually disposed on the housing of the loom stroboscope 10.
o In the loom stroboscope 10, the range of change of the delay angle may be defined by only one of the minimum value and the maximum value set by the observer. When the observer sets only the minimum value of the delay angle, the maximum value of the delay angle needs to be stored in advance in the storage unit of the controller 13. When the observer sets only the maximum value of the delay angle, the minimum value of the delay angle needs to be stored in advance in the storage unit of the controller 13.
o According to the present embodiment, the range of change of the delay angle is defined by the minimum value and the maximum value, but may be defined by a reference value θb and an allowable deviation ±α from the reference value θb. In this modification, the delay angle is changed in a range of change of (θb - α) to (θb + α).

Alternatively, in the loom stroboscope 10, only the reference value θb may be set by the observer. In this modification, the allowable deviation α is stored in the storage unit of the controller 13.
∘ The amount of change of the delay angle may be a fixed value stored in advance in the storage unit of the controller 13.
o The trigger control unit 13a does not necessarily need to repeatedly change the delay angle by the predetermined amount of change within the predetermined range of change. In other words, the trigger control unit 13a may end the setting of the delay angle after changing the delay angle to the maximum value of the range of change.
o The loom stroboscope 10 may have a connection port to which an external memory, such as a USB or an SD card, is connected. This configuration allows the images captured by the camera 12 to be stored in the external memory.
o The camera 12 needs to capture an image in synchronization with the light emission of the light emitting device 11, but the trigger control unit 13a does not necessarily need to transmit a trigger signal to the camera 12.
o The object of the observation is not limited to the weft yarn. For example, the object of the observation may be the loom 100.

### Reference Signs List

10 Loom stroboscope
11 Light emitting device
12 Camera
13a Trigger control unit
14 Input unit
15 Display as image display
100 Loom
101 Main shaft

## Claims

1. A loom stroboscope (10) comprising:
a light emitting device (11); and
a trigger control unit (13a) configured to transmit a trigger signal to the light emitting device (11) to cause the light emitting device (11) to emit light when a main shaft (101) of a loom (100) rotates by a delay angle from a reference angle, **characterized in that**
the trigger control unit (13a) is configured to change the delay angle by a predetermined amount of change within a predetermined range of change.

2. The loom stroboscope (10) according to claim 1, **characterized in that** the loom stroboscope (10) includes an input unit (14) for inputting the predetermined range of change and the predetermined amount of change.

3. The loom stroboscope (10) according to claim 1 or 2, **characterized in that** the loom stroboscope (10) includes a camera (12) that is configured to capture an image in synchronization with light emission of the light emitting device (11).

4. The loom stroboscope (10) according to claim 3, **characterized in that** the loom stroboscope (10) includes an image display (15) for displaying the image captured by the camera (12).

5. The loom stroboscope (10) according to any one of claims 1 to 4, **characterized in that** the trigger control unit (13a) is configured to repeatedly change the delay angle by the predetermined amount of change within the predetermined range of change.

## Patentansprüche

1. Webmaschinenstroboskop (10) mit
einer Lichtemissionsvorrichtung (11), und
einer Auslösersteuereinheit (13a), die dazu eingerichtet ist, um ein Auslösersignal an die Lichtemissionsvorrichtung (11) zu übermitteln, um die Lichtemissionsvorrichtung (11) dazu zu bringen, Licht zu emittieren, wenn sich eine Hauptwelle (101) einer Webmaschine (100) um einen Verzögerungswinkel von einem Referenzwinkel dreht, charakterisiert dadurch, dass
die Auslösersteuereinheit (13a) dazu eingerichtet ist, um den Verzögerungswinkel um einen vorbestimmten Änderungswert innerhalb eines vorbestimmten Änderungsbereichs zu ändern.

2. Webmaschinenstroboskop (10) nach Anspruch 1, **dadurch gekennzeichnet, dass** das Webmaschinenstroboskop (10) eine Eingabeeinheit (14) für eine Eingabe des vorbestimmten Änderungsbereichs und des vorbestimmten Änderungswertes umfasst.

3. Webmaschinenstroboskop (10) nach Anspruch 1 oder 2, **dadurch gekennzeichnet, dass** das Webmaschinenstroboskop (10) eine Kamera (12) umfasst, die dazu eingerichtet ist, um ein Bild in Synchronisation mit Lichtemission der Lichtemissionsvorrichtung (11) zu erfassen.

4. Webmaschinenstroboskop (10) nach Anspruch 3, **dadurch gekennzeichnet, dass** das Webmaschinenstroboskop (10) eine Bildanzeige (15) für eine Anzeige des durch die Kamera (12) erfassten Bildes umfasst.

5. Webmaschinenstroboskop (10) nach einem der Ansprüche 1 bis 4, **dadurch gekennzeichnet, dass** die Auslösersteuereinheit (13a) dazu eingerichtet ist, um den Verzögerungswinkel wiederholt um den vorbestimmten Änderungswert innerhalb des vorbestimmten Änderungsbereichs zu ändern.

## Revendications

1. Stroboscope pour métier à tisser (10) comprenant :
un dispositif émetteur de lumière (11) ; et
une unité de commande de déclenchement (13a) configurée pour transmettre un signal de déclenchement au dispositif émetteur de lumière (11) afin d'amener le dispositif émetteur de lumière (11) à émettre de la lumière lorsqu'un arbre principal (101) d'un métier à tisser (100) tourne d'un angle de retard à partir d'un angle de référence, **caractérisé en ce que**
l'unité de commande de déclenchement (13a) est configurée pour modifier l'angle de retard d'une valeur de modification prédéterminée dans une plage de modification prédéterminée.

2. Stroboscope pour métier à tisser (10) selon la revendication 1, **caractérisé en ce que** le stroboscope pour métier à tisser (10) comprend une unité de saisie (14) pour saisir la plage de modification prédéterminée et la valeur de modification prédéterminée.

3. Stroboscope pour métier à tisser (10) selon la revendication 1 ou 2, **caractérisé en ce que** le stroboscope pour métier à tisser (10) comprend une caméra (12) qui est configurée pour capturer une image en synchronisme avec l'émission de lumière du dispositif émetteur de lumière (11).

4. Stroboscope pour métier à tisser (10) selon la revendication 3, **caractérisé en ce que** le stroboscope pour métier à tisser (10) comprend un dispositif d'affichage d'image (15) pour afficher l'image capturée par la caméra (12).

5. Stroboscope pour métier à tisser (10) selon l'une quelconque des revendications 1 à 4, **caractérisé en ce que** l'unité de commande de déclenchement (13a) est configurée pour modifier de manière répétée l'angle de retard de la valeur de modification prédéterminée dans la plage de modification prédéterminée.
